# EUROPEAN PATENT SPECIFICATION

(11) **EP 3 036 149 B1**
(45) Date of publication and mention of the grant of the patent: **11.04.2018**
(21) Application number: 14750743.8
(22) Date of filing: 14.08.2014
(51) Int. Cl.: B62J 6/00, B62J 6/02, B62J 6/04, B62J 11/00

(54) **LIGHTING DEVICE FOR A BICYCLE**
BELEUCHTUNGSVORRICHTUNG FÜR EIN FAHRRAD
DISPOSITIF D'ÉCLAIRAGE POUR BICYCLETTE

(30) Priority: 21.08.2013 GB 201314944
(43) Date of publication of application: 29.06.2016
(73) Proprietor: Mcaleese, William Philip, Newtownards, County Down BT23 8FW (GB)
(72) Inventor: Mcaleese, William Philip, Newtownards, County Down BT23 8FW (GB)
(74) Representative: FRKelly
(86) International application number: PCT/EP2014/067416
(87) International publication number: WO 2015/024854

(56) References cited:
- EP-A2- 0 904 982
- WO-A1-2011/006209
- US-A1- 2004 189 722
- US-A1- 2007 063 831
- US-A1- 2010 283 590
- US-A1- 2012 081 887
- US-A1- 2012 112 635

## Description

This invention relates to a lighting device and in particular to a lighting device for a bicycle for alerting other road users of the presence of the bicycle, particularly during high risk manoeuvres, such as when braking or changing direction.

Bicycle users are one of the most vulnerable groups of road users. Furthermore, the small size of a bicycle compared to other vehicles, particularly from the front or rear of the bicycle, makes it harder for other road users to see bicycles.

Bicycle lighting systems are known for improving the visibility of bicycles, particularly in low light conditions. Such typically comprise light units having an mounted on the front and rear of the bicycle, each unit having an incandescent bulb, or more commonly an array of LEDs, typically with white LEDs at the front and red LEDs at the rear. Such light units typically contain one or more batteries for powering the respective LEDs to provide continuous illumination. It is also known to provide control circuitry arranged to cause the LEDs to flash at a predetermined rate. Flashing LEDs are often preferred as such may be more effective at attracting the attention of other road users and may also prolong battery life when compared to light units with continuous illumination.

A problem with such known bicycle lighting systems is that they do not provide any variation in illumination and thus do not provide a feedback to the viewer to indicate that the bicycle may be decelerating or changing direction.

US 2012/112635, US 2010/283590, US 2007/063831, US 2012/081887, US 2004/189722 and EP 0904982 all show known lighting device.

An object of the present invention is to provide an improved bicycle lighting device that provides greater visibility for cyclists during higher risk scenarios.

According to the present invention there is provided a lighting device for a bicycle as claimed in claim 1.

In a preferred embodiment said at least one light emitter comprises one or more light emitting diodes (LEDs).

The controller effectively assesses the magnitude of a risk situation and activates the at least one light emitter in reaction to this. The system may also incorporate a microphone and/or other sensors, such as a light sensor, providing at least one further input signal to the controller.

In one embodiment, the device may incorporate different coloured LEDs, different LEDs being illuminated depending upon the orientation of the device, such that the device may be used as both a front light and a back light depending upon its orientation (i.e. white LEDs being illuminated in one orientation by use as a front light and red LEDs being illuminated in another orientation for use as a rear light).

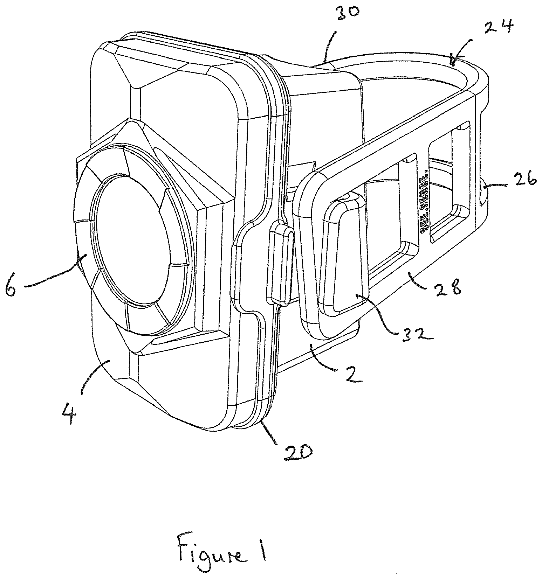

A bicycle lighting device in accordance with an embodiment of the present invention will now be described, by way of example only, with reference to the accompanying drawings, in which :-
Figure 1 is a perspective view of a portable lighting device in accordance with an embodiment of the present invention;

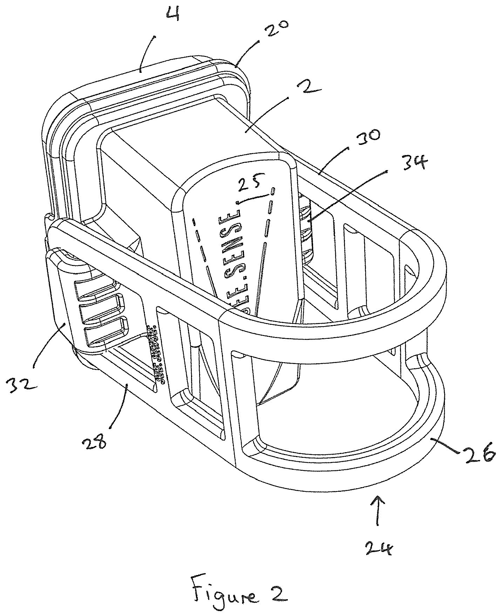

Figure 2 is a perspective view of the device of Figure 1 from the rear;

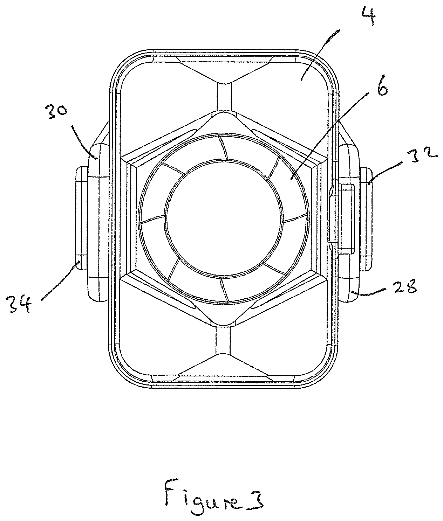

Figure 3 front view of the device of Figure 1;

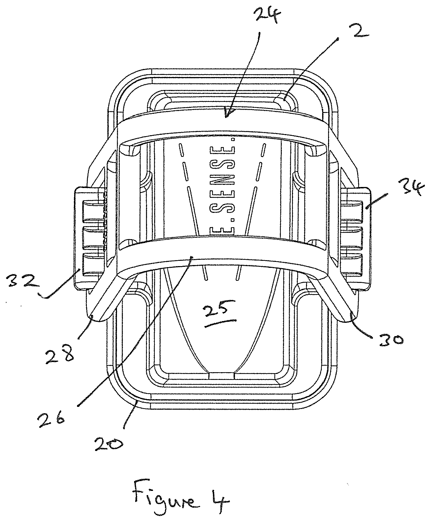

Figure 4 is a rear view of the device of Figure 1;

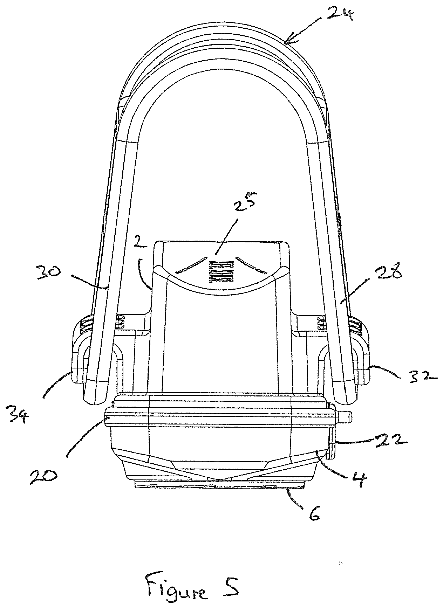

Figure 5 is a top view of the device of Figure 1;
Figure 6 is an exploded perspective view of the device of Figure 1; and
Figure 7 is an exploded perspective view of the device of Figure 1 from the rear.

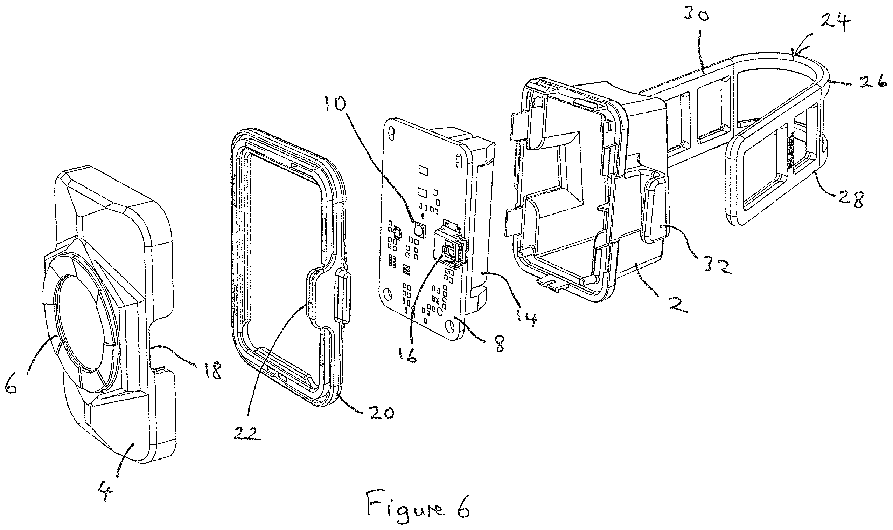

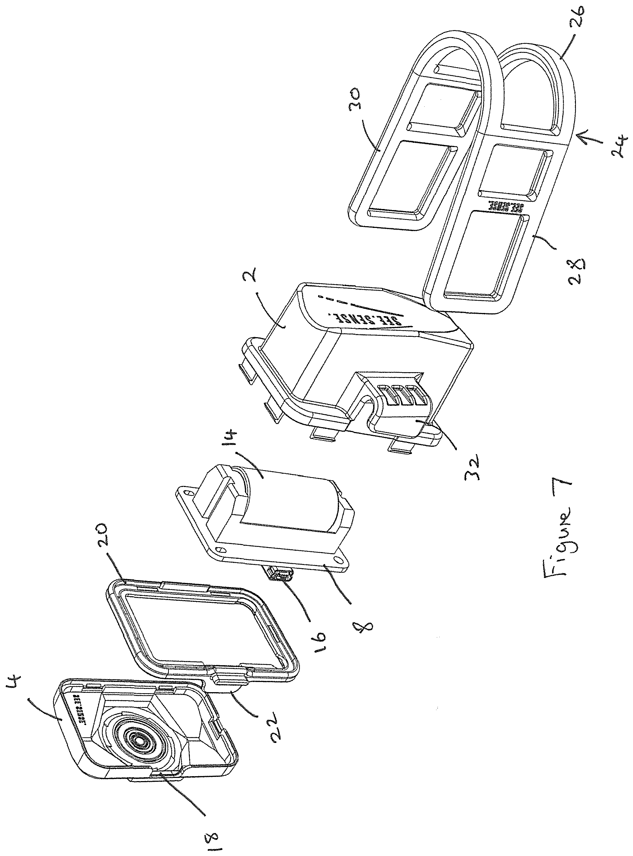

As shown in the drawings, with particular reference to Figure 6 and 7, a portable lighting device in accordance with an embodiment of the present invention, particularly a lighting device intended for attachment to a bicycle, comprising a housing 2 having a front cover 4 incorporating a Fresnel lens 6, a printed circuit board 8 being mounted within the housing 2, the printed circuit board 8 incorporating a high intensity LED 10 arranged to pass light through the Fresnel lens 6 of the front cover. The printed circuit board 8 also incorporates LED drive circuitry, a programmable microcontroller for controlling operation of the LED 10 as well as a three axis accelerometer connected to the microcontroller.

A battery 14 is mounted on a rear side of the printed circuit board 8 for powering the device. The battery 14 may comprise a rechargeable battery.

A female USB connector 16 is provided on the printed circuit board 8 in a position to be aligned with an aperture 18 in the housing 2 and/or front cover 4 for charging the battery 14 and/or programming the microcontroller.

A silicone gasket 20 is provided between the housing 2 and the front cover 4 to provide a water resistant seal. The gasket incorporates a plug or bung 22 for sealing the USB connector 16.

A rear side of the housing 2 is shaped to engage a tubular portion of a bicycle frame. An elastic strap 24 is provided for mounting the device onto a bicycle, or other object. The elastic strap 24, which may be formed from silicone rubber or any other suitable elastomeric material, having a base portion 26 adapted to engage a rear side of a tubular frame or other object against which the device is mounted and a pair of wing portions 28,30 extending from either side of the base portion adapted to be received over mounting flanges 32,34 provided on the sides of the housing 2.

A rear face 25 of the housing 2 and the mounting flanges 32,34 may be angled, for example at an angle of 10° to the front cover 4, to facilitate mounting of the device on an angled frame tube of a bicycle while ensuring that the front cover 4 of the device remains vertical so that light is emitted from the LED horizontally, via the focusing effect of the Fresnel lens 6.

Tabs (not shown) may be provided on each wing portion 28,30 of the elastic strap 24 to enable the wing portions 28,30 to be pulled over the mounting flanges 32,34 of the housing 2.

The microcontroller is programmed to operate the LED as a function of data received from the accelerometer. The microcontroller utilises the accelerometer to measure the acceleration, orientation and rate of change of orientation of the device (i.e. roll, pitch and yaw) in 3 axes. This data is used to determine a "risk score", indicative of the scenario in which the object (e.g. bicycle) is operating and the likely risk to the operator.

The measured values from the accelerometer are compared to a look up table to detect the likely scenario in which the object is operating to determine the risk score or to further adjust the risk score.

Where the device is intended for use by a cyclist, stored data may be provided relating to known scenarios such as traversing a roundabout, filtering in traffic, approaching or exiting a road junction, sudden braking or swerving, sudden tyre puncture event, change of road surface (e.g. indicating an enhanced grip braking or cornering zone), asymmetric sideways movement (indicating a gust of wind or suction from a passing vehicle), sudden changes in rate or orientation, followed by a free-fall or spikes in acceleration, followed by a near rest state (indicating a potential collision or crash), and cadence (rate of pedalling) beyond the normal expected range.

The microcontroller is programmed to adjust the brightness and/or rate or pattern of flashing of the LED based upon the determined risk score.

The intermittent operation of the LED, and reduced brightness operation during periods of low risk score, reduces the power consumption of the device compared to known bicycle lighting devices, while providing greater visibility during higher risk situations.

Accident statistics from around the world indicate that more than two thirds of cycle accidents occur in urban areas, at or near road junctions and in daylight hours. Most bicycle lights are insufficiently bright to be visible in these situations. Current bicycle light designs frequently focus their beam pattern to a tight rearward cone. This limits their side visibility, compromising their effectiveness. The device in accordance with the present invention can be brighter than existing designs and can be implemented so no such beam focusing is required.

Further sensors may be provided on the device providing additional inputs to the microcontroller, said additional inputs being compared to reference data, along with data from the accelerometer, to determine the risk score. Such further sensors may comprise a microphone for detecting the noise levels adjacent the unit, which may indicate when the rider is in heavy traffic, and/or a light sensor, which may detect sudden in light level, indicating if it is day or night. Sudden changes in light level may indicate entering a tunnel or travelling under and overpass or may indicate the headlights of other vehicles illuminating the device. This data may be stored against time to give the device a prediction of ongoing ambient levels in order to let the device know if it is day or night, or more importantly, if the device is in an environment transitioning between night and day (at dawn or dusk) which is when many accidents occur. During these transition times, the device may apply a higher weighting to risk scores in order to increase flash rate/illumination to further increase the visibility of the user.

The invention is not limited to the embodiment(s) described herein but can be amended or modified without departing from the scope of the present invention as defined in the appended claims.

## Claims

1. A lighting device for a bicycle comprising at least one light emitter (10) and a controller programmed to vary the brightness and/or flash rate and/or flashing pattern of the at least one light emitter (10) based upon the measurement of the motion of the device, wherein the controller is provided with sensor means in the form of a three axis accelerometer to measure the acceleration, orientation and rate of change of orientation of the device, **characterised in that** the controller is configured to compare the measured acceleration, orientation and rate of change of orientation with reference data contained in predetermined look-up tables to determine a risk score, the controller being configured to select the brightness and/or flash rate and/or flashing pattern of the at least one light emitter as a function of the risk score.

2. A device as claimed in claim 1, wherein said at least one light emitter comprises one or more light emitting diodes (LEDs) (10).

3. A device as claimed in any preceding claim, further comprising a microphone and/or other sensors, providing at least one further input signal to the controller.

4. A device as claimed in claim 3, wherein said further sensor comprises a light sensor.

5. A device as claimed in any preceding claim, wherein the at least one light emitter (10) comprises different coloured LEDs, different LEDs being illuminated depending upon the orientation of the device, such that the device may be used as both a front light and a back light of a vehicle depending upon its orientation.

6. A lighting device as claimed in any preceding claim, wherein the device includes a Fresnel lens (6) through which light from said at least one light emitter (10) is passed.

7. A lighting device as claimed in any preceding claim, wherein the device comprises a housing (2) within which said at least one light emitter (10) is mounted, said housing (2) being provided with an elasticated strap (24) for securing the housing (2) to an object.

## Patentansprüche

1. Beleuchtungsvorrichtung für ein Fahrrad, umfassend mindestens einen Lichtsender (10) und eine Steuerung, die programmiert ist, die Helligkeit und/oder Blinkgeschwindigkeit und/oder das Blinkmuster des mindestens einen Lichtsenders (10) auf der Basis der Messung der Bewegung der Vorrichtung zu variieren, wobei die Steuerung mit einem Sensormittel in Form eines Dreiachsenbeschleunigungsmessers zum Messern der Beschleunigung, Ausrichtung und Geschwindigkeit der Änderung der Ausrichtung der Vorrichtung versehen ist, **dadurch gekennzeichnet, dass** die Steuerung konfiguriert ist, die gemessene Beschleunigung, Ausrichtung und Geschwindigkeit der Änderung der Ausrichtung mit in vorgegebenen Lookup-Tabellen enthaltenen Referenzdaten zu vergleichen, um einen Risikowert zu bestimmen, wobei die Steuerung konfiguriert ist, die Helligkeit und/oder Blinkgeschwindigkeit und/oder das Blinkmuster des mindestens einen Lichtsenders als eine Funktion des Risikowerts auszuwählen.

2. Vorrichtung nach Anspruch 1, wobei der mindestens eine Lichtsender eine oder mehrere Leuchtdioden (LEDs) (10) umfasst.

3. Vorrichtung nach einem der vorangehenden Ansprüche, ferner umfassend ein Mikrofon und/oder andere Sensoren, die der Steuerung mindestens ein weiteres Eingabesignal bereitstellen.

4. Vorrichtung nach Anspruch 3, wobei der weitere Sensor einen Lichtsensor umfasst.

5. Vorrichtung nach einem der vorangehenden Ansprüche, wobei der mindestens eine Lichtsender (10) LEDs unterschiedlicher Farben umfasst, wobei die unterschiedlichen LEDs abhängig von der Ausrichtung der Vorrichtung beleuchtet werden, sodass die Vorrichtung abhängig von ihrer Ausrichtung sowohl als Vorderlicht als auch Rücklicht eines Fahrzeugs verwendet werden kann.

6. Beleuchtungsvorrichtung nach einem der vorangehenden Ansprüche, wobei die Vorrichtung eine Fresnellinse (6) beinhaltet, durch die Licht von dem mindestens einen Lichtsender (10) geführt wird.

7. Beleuchtungsvorrichtung nach einem der vorangehenden Ansprüche, wobei die Vorrichtung ein Gehäuse (2) umfasst, in dem der mindestens eine Lichtsender (10) montiert ist, wobei das Gehäuse (2) mit einem elastischen Band (24) zum Sichern des Gehäuses (2) an einem Objekt versehen ist.

## Revendications

1. Dispositif d'éclairage pour une bicyclette comprenant au moins un émetteur de lumière (10) et un élément de commande programmé pour varier la luminosité et/ou la vitesse de clignotement et/ou le schéma de clignotement de l'au moins un émetteur de lumière (10) sur la base de la mesure du mouvement du dispositif, dans lequel l'élément de commande est pourvu d'un moyen formant capteur sous la forme d'un accéléromètre à trois axes pour mesurer l'accélération, l'orientation et la vitesse de changement de l'orientation du dispositif, **caractérisé en ce que** l'élément de commande est configuré pour comparer l'accélération, l'orientation et la vitesse de changement de l'orientation mesurées avec des données de référence contenues dans des tables de consultation prédéterminées pour déterminer un indice de risque, l'élément de commande étant configuré pour sélectionner la luminosité et/ou la vitesse de clignotement et/ou le schéma de clignotement de l'au moins un émetteur de lumière comme une fonction de l'indice de risque.

2. Dispositif selon la revendication 1, dans lequel ledit au moins un émetteur de lumière comprend une ou plusieurs diodes émettrices de lumière (DEL) (10).

3. Dispositif selon l'une quelconque des revendications précédentes, comprenant en outre un microphone et/ou d'autres capteurs, fournissant au moins un signal entrant supplémentaire à l'élément de commande.

4. Dispositif selon la revendication 3, dans lequel ledit capteur supplémentaire comprend un capteur de lumière.

5. Dispositif selon l'une quelconque des revendications précédentes, dans lequel l'au moins un émetteur de lumière (10) comprend des DEL de couleur différente, les différentes DEL étant illuminées en fonction de l'orientation du dispositif, de sorte que le dispositif peut être utilisé à la fois comme un feu avant et un feu arrière d'un véhicule en fonction de son orientation.

6. Dispositif d'éclairage selon l'une quelconque des revendications précédentes, dans lequel le dispositif inclut a lentille de Fresnel (6) à travers laquelle passe la lumière dudit au moins un émetteur de lumière (10).

7. Dispositif d'éclairage selon l'une quelconque des revendications précédentes, dans lequel le dispositif comprend un boîtier (2) au sein duquel ledit au moins un émetteur de lumière (10) est monté, ledit logement (2) étant pourvu d'une bande élastique (24) pour fixer le boîtier (2) à un objet.
